# EUROPÄISCHE PATENTANMELDUNG

(11) **EP 4 740 718 A1**
(43) Veröffentlichungstag der Anmeldung: **13.05.2026**
(21) Anmeldenummer: 24211551.7
(22) Anmeldetag: 07.11.2024
(51) Int. Cl.: A01D 34/00, A47L 9/00

(54) **ELEKTRISCHES ARBEITSGERÄT UND VERFAHREN ZUM HERSTELLEN EINES ELEKTRISCHEN ARBEITSGERÄTS**

(71) Anmelder: Andreas Stihl AG & Co. KG, 71336 Waiblingen (DE)
(72) Erfinder: Eiber, Karl-Philipp, 73614 Schorndorf (DE); Berger, Christian, 70806 Kornwestheim (DE); Peters, Tanja, 71554 Weissach im Tal (DE); Gerk, Nicolai, 36137 Großenlüder (DE)

(57) **Zusammenfassung**

Vorgeschlagen wird ein elektrisches Arbeitsgerät (500) mit mindestens einer Platine (530) und ein Verfahren zum Herstellen des elektrischen Arbeitsgeräts (500) mit der mindestens einen Platine (530), wobei zur Montage der mindestens einen Platine (530) in dem elektrischen Arbeitsgerät (500) ein Träger (510) für die mindestens eine Platine (530) und mindestens ein Trägerhaltemittel zum Einsatz kommt, die eine Vormontage der mindestens einen Platine (530) in einer Vormontagestellung an einem Gehäuseabschnitt, bspw. eines Gehäuseteils (520), des elektrischen Arbeitsgeräts (500) ermöglichen. Nach erfolgter Vormontage in der Vormontagestellung wird der Träger (510) mit der mindestens einen vormontierten Platine (530) in eine Endposition in dem Arbeitsgerät (500) relativ zu dem Gehäuseabschnitt verfahren, an dem die Vormontage der mindestens einen Platine (530) erfolgte. Durch die vorgeschlagene Ausgestaltung des elektrischen Arbeitsgeräts (500) und das vorgeschlagene Verfahren kann die mindestens eine Platine (530) einfacher und damit schneller sowie auch zuverlässiger in dem elektrischen Arbeitsgerät (500) montiert werden.

## Beschreibung

### Gebiet der Erfindung

Die Erfindung betrifft elektrische Arbeitsgeräte und Verfahren zum Herstellen eines elektrischen Arbeitsgeräts, insbesondere Vorrichtungen und Verfahren zur Montage mindestens einer Platine in einem elektrischen Arbeitsgerät, bspw. einem Dienstroboter, insbesondere einem Mäh-, Kehr- oder Saugroboter.

### Stand der Technik

Elektrische Arbeitsgeräte, bspw. Dienstroboter wie Mäh-, Kehr- oder Saugroboter, sind grundsätzlich bekannt, beispielsweise aus EP 3 412 129 B1 oder EP 4 014 710 B1. Demgemäß sind auch Verfahren zum Herstellen eines elektrischen Arbeitsgeräts, insbesondere Vorrichtungen und Verfahren zur Montage mindestens einer Platine in einem elektrischen Arbeitsgerät, ebenfalls bekannt.

### Aufgabe

Aufgabe der Erfindung ist es, Verfahren und Vorrichtungen bereitzustellen, mit denen die Montage mindestens einer Platine in einem elektrischen Arbeitsgerät einfacher und zuverlässiger erfolgen kann.

### Lösung:

Zur Lösung der Aufgabe wird ein elektrisches Arbeitsgerät, bspw. ein Dienstroboter, insbesondere ein Mäh-, Kehr- oder Saugroboter, mit einem Gehäuse, einem Träger für mindestens eine Platine und mindestens einem Trägerhaltemittel vorgeschlagen. Das mindestens eine Trägerhaltemittel ist ausgebildet, um den Träger unmittelbar an einem Abschnitt des Gehäuses bzw. Gehäuseabschnitt des elektrischen Arbeitsgeräts in einer Vormontagestellung zu halten, um eine Vormontage der mindestens einen Platine an dem Träger in der Vormontagestellung zu ermöglichen. Der Träger ist zudem ausgebildet, um mit der mindestens einen Platine nach Abschluss der Vormontage von der Vormontagestellung zu einer Endposition bewegt bzw. verfahren zu werden, wobei das Verfahren des Trägers von der Vormontagestellung zu der Endposition relativ zu dem Gehäuseabschnitt zur Montage der mindestens einen Platine in dem elektrischen Arbeitsgerät erfolgt.

Platinen sind Träger für elektronische Bauteile. Sie werden in vielen elektrischen Arbeitsgeräten mit elektrischen bzw. elektronischen Komponenten verbunden, um die elektrischen bzw. elektronischen Komponenten bspw. mit Energie, Steuerbefehlen und/oder Informationen bzw. Daten zu versorgen oder von diesen Energie, Steuerbefehle und/oder Informationen bzw. Daten zu erhalten. Die elektronischen Bauteile einer Platine umfassen demnach Anschlüsse bzw. Verbindungselemente, wie z.B. Stecker bzw. Steckerleisten, zur elektrischen Verbindung mit den elektrischen bzw. elektronischen Komponenten eines Arbeitsgeräts. Zudem umfassen sie in vielen Fällen Steuerelemente, wie z.B. Schalter oder Mikrocontroller, oder Speicherelemente zur Hinterlegung von Programmen zur Steuerung oder Regelung, zum Speichern von Sensordaten oder Kennlinien zur Bewertung von Sensordaten. Platinen weisen zudem Verbindungsleitungen zur elektrischen Verbindung der elektronischen Bauteile untereinander auf.

Die elektrischen bzw. elektronischen Komponenten eines Arbeitsgeräts können Elektro- bzw. Servomotoren umfassen. Sie können auch Bedienelemente zur Ausgabe bzw. Anzeige von Informationen bzw. zur manuellen Eingabe von Informationen bzw. Befehlen oder Mittel zur Kommunikation mit anderen Geräten, insbesondere zur drahtlosen Kommunikation, sein. Komponenten zur Stromversorgung anderer elektrischer bzw. elektronischer Komponenten eines Arbeitsgeräts oder der elektronischen Bauteile einer Platine gehören ebenfalls dazu. Dies können Batterien oder Akkuschächte oder Anschlüsse für eine externe Stromversorgung sein. In elektrischen Arbeitsgeräten werden häufig auch Sensoren, wie bspw. Bewegungs-, Beschleunigungs-, Feuchte- oder Temperatursensoren, verbaut und dabei mit einer Platine verbunden.

Zur stabilen und exakten Positionierung von Platinen in elektrischen Arbeitsgeräten können Träger eingesetzt werden. Die Platinen können dazu an den Trägern befestigt werden. Die Träger mit den Platinen können anschließend an einer vorgegebenen Position in den Arbeitsgeräten fest verbaut und dort mit den elektrischen bzw. elektronischen Komponenten verbunden werden.

Zum Schutz vor Umwelteinflüssen können Platinen auch an Trägern befestigt werden, die aus zwei Halbschalen bestehen. Die Platinen können dabei zwischen den Halbschalen angeordnet und von diesen umfangen werden. Öffnungen oder zusätzliche Verbindungselemente in den Halbschalen ermöglichen elektrische Verbindungen zu den elektrischen bzw. elektronischen Komponenten eines Arbeitsgeräts. Die Halbschalen bieten Schutz vor Beschädigungen sowohl bei der Montage als auch dem Betrieb eines elektrischen Arbeitsgeräts. Sie können zudem so ausgestaltet werden, dass eine Platine zwischen den Halbschalen vor Feuchtigkeit und anderen Umwelteinflüssen geschützt werden kann.

Durch die vorgeschlagene Ausgestaltung kann die mindestens eine Platine bei der Montage des elektrischen Arbeitsgeräts zunächst in die Vormontagestellung an dem Gehäuseabschnitt gebracht und in dieser auch für die Dauer und zum Zweck der Vormontage gehalten werden, d.h. dass der Träger dabei bspw. stabil und eigenständig in der Vormontagestellung steht bzw. stehen bleiben kann. Zur Vormontage eignet sich in der Regel eine Vielzahl von Vormontagestellungen an dem Gehäuseabschnitt oder anderen Gehäuseabschnitten des elektrischen Arbeitsgeräts. Dazu gehören insbesondere Stellungen, die einen leichten Zugang zu den Verbindungselementen der mindestens einen Platine ermöglichen. In einem Ausführungsbeispiel wird eine Stellung gewählt, von der aus alle Verbindungselemente leicht zugänglich sind. In vielen Fällen kann die Vormontagestellung auch so gewählt werden, dass die mindestens eine Platine von mehr als einer Seite aus zugänglich ist. Durch die leichtere Zugänglichkeit in der Vormontagestellung können die elektrischen Verbindungen zwischen der mindestens einen Platine und den elektrischen bzw. elektronischen Komponenten des elektrischen Arbeitsgeräts schneller und zuverlässiger hergestellt werden. Insbesondere kann das Herstellen von Steckverbindungen in einer gut zugänglichen Vormontageposition bzw. - stellung erfolgen. Das Risiko für Beschädigungen bei der Montage fällt dadurch geringer aus. Darüber hinaus kann eine (Sicht-)Prüfung der hergestellten Verbindungen schneller und zuverlässiger erfolgen. Zudem kann das elektrische Arbeitsgerät kompakter gestaltet werden, da Zwischenräume für die Montage der mindestens einen Platine in der Endposition im Gehäuse des Arbeitsgeräts reduziert oder sogar vollständig entfallen können.

Unter einer Vormontagestellung ist eine Stellung eines Trägers und mindestens einer daran befestigten Platine an einem Gehäuseabschnitt eines elektrischen Arbeitsgeräts zu verstehen, die eine Vormontage der mindestens einen Platine ermöglicht. Dies bedeutet in vielen Fällen, dass in einer Vormontagestellung alle oder zumindest viele der vorgesehenen elektrischen Verbindungen zwischen der mindestens einen Platine und den elektrischen bzw. elektronischen Komponenten des elektrischen Arbeitsgeräts hergestellt werden können. Das gilt im Besonderen für elektrische Verbindungen, die in einer Endposition der mindestens einen Platine nicht mehr oder nur noch schwer zugänglich sind. Eine Endposition ist dabei eine Position, in der die mindestens eine Platine in dem Gehäuse eines elektrischen Arbeitsgeräts zur endgültigen Montage verbracht oder angeordnet wird.

In einer Ausführungsform muss die mindestens eine Platine zur endgültigen Montage nach erfolgter Vormontage in der Vormontagestellung nur noch in die dafür vorgesehene Endposition verfahren und ggf. in der für die mindestens einen Platine vorgesehenen Endposition noch zusätzlich am Gehäuse befestigt werden. Zusätzlich kann auch noch mindestens eine weitere elektrische Verbindung zwischen der mindestens einen Platine und einer elektrischen bzw. elektronischen Komponente des elektrischen Arbeitsgeräts hergestellt werden, wenn der Träger in die Endposition verfahren wurde. In einem Ausführungsbeispiel erfolgt dies mithilfe eines Verbindungselements der mindestens einen Platine, das auch in der Endposition der mindestens einen Platine leicht zugänglich ist.

An dem Träger können zwei oder mehr Platinen befestigt sein. Durch eine Montage von zwei oder mehr Platinen an dem Träger kann die relative Lage der Platinen sehr genau festgelegt werden. Dies ermöglicht u.a. elektrische Verbindungen zwischen den Platinen, sogenannte Board-to-Board-Verbindungen. Zudem können die Platinen in dem elektrischen Arbeitsgerät kompakter angeordnet werden. Auch dies ermöglicht eine kompaktere Gestaltung des elektrischen Arbeitsgeräts.

Der Träger ist so ausgebildet, dass er relativ zu dem Gehäuseabschnitt und/oder anderen Teilen des Gehäuses verfahrbar ist. Dies gilt insbesondere für das Verfahren von der Vormontagestellung zur Endposition. Durch eine derartige Ausbildung des Trägers kann das Gehäuse des elektrischen Arbeitsgeräts stabiler bzw. steifer ausgelegt werden.

Um die Zugänglichkeit zu den Verbindungselementen während der Vormontage aufrechtzuerhalten bzw. zu verbessern, kann der Träger eine oder mehrere Halterungen zur Aufnahme, Führung und/oder Fixierung eines oder mehrerer Kabel, die bspw. zum Herstellen der elektrischen Verbindungen zwischen der mindestens einen Platine und den elektrischen bzw. elektronischen Komponenten dienen, aufweisen. Mit derartigen Halterungen kann auch das Verfahren des Trägers in die Endposition erleichtert werden. Mit der mindestens einen Kabelhalterung bzw. Kabelführung kann bspw. ein oder mehrere Kabel, mit denen die mindestens eine Platine mit einer oder mehrerer elektrischer bzw. elektronischer Komponenten des elektrischen Arbeitsgeräts bei der Vormontage elektrisch verbunden werden, geführt bzw. verstaut werden.

Das mindestens eine Trägerhaltemittel kann als separates Bauteil ausgebildet sein. Es kann auch als Teil des Trägers oder des Gehäuses des elektrischen Arbeitsgeräts ausgebildet sein, d.h. es kann einstückig bzw. einteilig mit dem Träger oder dem Gehäuse ausgeführt sein. Durch eine Ausbildung als Teil des Trägers oder des Gehäuses kann u.a. die Vormontagestellung zumindest teilweise vorgegeben werden. Dadurch kann die Montage des Arbeitsgeräts, insbesondere die Vormontage der mindestens einen Platine auf dem Träger in der Vormontagestellung, schneller und zuverlässiger ausgeführt werden. Das gilt insbesondere, wenn das mindestens eine Trägerhaltemittel als Teil des Gehäuses ausgeführt ist.

Der Träger kann dazu ausgebildet sein, um in der Endposition unmittelbar an dem Gehäuseabschnitt des elektrischen Arbeitsgeräts befestigt zu werden. Er kann dazu mit mindestens einem Endpositionsbefestigungsmittel ausgestattet sein, das ausgestaltet ist, um den Träger in der Endposition unmittelbar an dem Gehäuseabschnitt des elektrischen Arbeitsgeräts zu befestigen. Die Befestigung kann mittels einer Rast- bzw. Schnappverbindung, mittels einer Schraubverbindung oder mittels einer stoffschlüssigen Verbindung, insbesondere Kleben und/oder Ultraschall-Schweißen, erfolgen. Dabei kann das Trägerhaltemittel ausgebildet sein, um den Träger in der Endposition unmittelbar an dem Gehäuseabschnitt des elektrischen Arbeitsgeräts zu befestigen. Der Träger kann auch mindestens ein weiteres Haltemittel aufweisen, wobei das mindestens eine weitere Haltemittel ausgebildet ist, um den Träger in der Endposition unmittelbar an dem Gehäuseabschnitt des elektrischen Arbeitsgeräts zu befestigen.

Die Vormontagestellung muss keine feste Position sein. Dementsprechend kann das mindestens eine Trägerhaltemittel ausgebildet sein, um den Träger an dem Gehäuseabschnitt des elektrischen Arbeitsgeräts in der Vormontagestellung verschiebbar, drehbar und/oder schwenkbar zu lagern. Die damit verbundene Flexibilität des Trägers in der Vormontagestellung kann zur schnelleren und zuverlässigeren Verbindung der mindestens einen Platine mit den elektrischen bzw. elektronischen Komponenten des elektrischen Arbeitsgeräts genutzt werden. Dies gilt vor allem für Ausführungsbeispiele, in denen die mindestens eine Platine von mehr als einer Seite mit den elektrischen bzw. elektronischen Komponenten verbunden werden soll.

Das elektrische Arbeitsgerät kann zudem ein weiteres Trägerhaltemittel aufweisen und die Vormontagestellung eine bevorzugte Vormontageposition umfassen. Dabei kann das weitere Trägerhaltemittel ausgebildet sein, um den Träger in der bevorzugten Vormontageposition zu halten. Auf diese Weise lässt sich der Träger in einer Vorzugsposition an dem Gehäuseabschnitt anordnen.

Das weitere Trägerhaltemittel kann bspw. als eine Stützstruktur am Gehäuse des elektrischen Arbeitsgeräts ausgebildet sein. Dadurch kann u.a. die bevorzugte Vormontageposition in eindeutiger Weise vorgegeben werden. Durch eine eindeutige Vorgabe der bevorzugten Vormontageposition kann die Vormontage der mindestens einen Platine schneller und zuverlässiger erfolgen.

In einer Ausführungsform kann die Vormontagestellung eine zum Gehäuse des elektrischen Arbeitsgeräts angehobene bzw. aufrechte Stellung sein. In dieser Stellung kann der Träger bspw. um eine Hochachse schwenkbar gelagert sein und in einer bevorzugten Vormontageposition zur Endposition ausgedreht gelagert sein. Nach erfolgter Vormontage in der bevorzugten Vormontageposition kann der Träger beim Verfahren in die Endposition um die Hochachse gedreht und dann in das Gehäuse abgesenkt bzw. abgelassen werden, d.h. er wird in einer kombinierten Dreh- und Translationsbewegung relativ zum Gehäuse verfahren. Derart ausgedrehte Vorzugspositionen können die Zugänglichkeit der mindestens einen Platine bei der Vormontage verbessern.

Um den Träger mit der mindestens einen Platine nach Abschluss der Vormontage von der Vormontagestellung an dem Gehäuseabschnitt des elektrischen Arbeitsgeräts zu einer Endposition relativ zu dem Gehäuseabschnitt des elektrischen Arbeitsgeräts zu verfahren, kann das elektrische Arbeitsgerät und/oder der Träger ein Führungsmittel aufweisen. Auf diese Weise kann die Endmontage der mindestens einen Platine in der Endposition schneller und zuverlässiger gestaltet werden.

Das mindestens eine Trägerhaltemittel kann eine Führungshülse, insbesondere eine Schraubhülse, oder ein Teil einer Führungshülse, insbesondere einer Schraubhülse, sein. Das mindestens eine Trägerhaltemittel kann auch als Schraubdom oder Teil eines Schraubdoms ausgeführt werden. Rast- bzw. Schnappverbinder sind ebenfalls mögliche Ausgestaltungen für das mindestens eine Trägerhaltemittel.

Das elektrische Arbeitsgerät kann mindestens ein Trägerhaltemittelgegenstück umfassen, wobei das mindestens eine Trägerhaltemittel und das mindestens eine Gehäusehaltemittel ausgebildet sind, um zum Halten des Trägers unmittelbar an dem Gehäuseabschnitt des elektrischen Arbeitsgeräts in der Vormontagestellung zusammenzuwirken.

Dabei kann die Vormontagestellung an dem Gehäuseabschnitt durch die Ausgestaltung des Trägerhaltemittels und des Trägerhaltemittelgegenstücks eindeutig vorgegeben sein. Durch die Vorgabe einer eindeutigen Vormontagestellung kann die Zugänglichkeit zu den Verbindungselementen der mindestens einen Platine verbessert und in vielen Fällen sogar sichergestellt werden.

Das mindestens eine Trägerhaltemittelgegenstück kann als Führungsstift, insbesondere als Schraubdom, oder Teil eines Führungsstifts, insbesondere eines Schraubdoms, ausgeführt sein. Rast- bzw. Schnappverbinder sind ebenfalls mögliche Ausgestaltungen für das mindestens eine Gehäusehaltemittel.

Ist das mindestens eine Trägerhaltemittel als Schraubhülse ausgeführt, ist es bspw. denkbar, an dem Gehäuseabschnitt einen dazu korrespondierenden Schraubdom als Trägerhaltemittelgegenstück anzubringen. Die Schraubhülse und der Schraubdom können dann zu einem Dreh-Schubgelenk zusammengesetzt und genutzt werden, um bspw. eine kombinierte Dreh- und Translationsbewegung des Trägers relativ zu dem Gehäuse bzw. dem Gehäuseabschnitt umzusetzen, um den Träger mit der mindestens einen Platine bspw. nach erfolgter Vormontage in die Endposition zu verfahren und bspw. durch Verschraubung der Schraubhülsen mit den Schraubdomen unmittelbar an dem Gehäuseabschnitt zu befestigen. Durch diese Minimaloperation können Beschädigungen oder ein Einklemmen von Leitungen vermieden werden.

Der Träger kann ausgestaltet sein, um Steckkräfte aufzunehmen, v.a. solche, die sonst die mindestens eine Platine aufnehmen müsste. Der Träger kann zudem eine Ausgestaltung aufweisen, die mechanischen Schutz der mindestens einen Platine vor Beschädigungen bietet. Der Träger kann dabei steif bzw. biegesteif oder mit überstehenden Geometrien bzw. Auskragungen ausgeführt sein. Die Befestigung an dem Träger kann auch Schutz gegen ein unbeabsichtigtes Lösen elektrischer Verbindungen bieten, v.a. wenn der Träger ausgestaltet ist, um Vibrationen zu dämpfen bzw. zu reduzieren.

Der Träger kann zudem aus einem oder mehreren Materialien gefertigt und/oder derart ausgebildet sein, um elektromagnetische Störeinflüsse, insbesondere der elektronischen Bauteile der mindestens einen Platine, abzuschirmen bzw. abzuschwächen bzw. zu reduzieren. In ähnlicher Weise kann der Träger zur Wärmeabfuhr bzw. Wärmemanagement genutzt werden. Das heißt, dass der Träger so ausgebildet sein kann, bspw. bzgl. seiner Geometrie und/oder Werkstoffwahl / -kombination, dass mit ihm überschüssige Wärme, insbesondere von den elektronischen Bauteilen der mindestens einen Platine, abgeführt werden kann.

Zur Lösung der Aufgabe wird des Weiteren ein Verfahren zum Herstellen eines elektrischen Arbeitsgeräts, bspw. eines der soeben vorgeschlagenen elektrischen Arbeitsgeräte bzw. eines Dienstroboters, insbesondere eines Mäh-, Kehr- oder Saugroboters, mit mindestens einer Platine mit folgenden Schritten vorgeschlagen:
- Platzieren eines Trägers für die mindestens eine Platine in einer Vormontagestellung an einem Gehäuseabschnitt des elektrischen Arbeitsgeräts;
- Vormontieren der mindestens einen Platine auf dem Träger in der Vormontagestellung an dem Gehäuseabschnitt; und
- Verfahren des Trägers in eine Endposition des elektrischen Arbeitsgeräts, wobei das Verfahren des Trägers relativ zu dem Gehäuseabschnitt zur Montage der mindestens einen Platine in der Endposition erfolgt.

Die Vormontage der mindestens einen Platine kann ein Befestigen der Platine auf dem Träger umfassen. Die mindestens eine Platine kann auch vor der Vormontage an dem Träger befestigt werden. Die mindestens eine Platine kann insbesondere an dem Träger befestigt werden, bevor der Träger in die Vormontagestellung an dem Gehäuseabschnitt des Arbeitsgeräts zur Vormontage platziert und dort von dem mindestens einen Trägerhaltemittel gehalten wird. Die Befestigung der mindestens einen Platine an dem Träger kann damit bspw. in einer Elektronikwerkstatt erfolgen, während die Montage des Trägers mit der mindestens einen Platine in einer raueren Umgebung, bspw. einer Montage-Halle, erfolgt. Die mindestens eine Platine kann dabei an dem Träger durch eine Rast- bzw. Schnappverbindung, durch eine Schraubverbindung und/oder durch eine stoffschlüssige Verbindung, insbesondere Kleben, befestigt werden. Die mindestens eine Platine kann auch durch Verprägen bzw. Vernieten von Kunststoffpins, Ultraschallnieten, Heißverstemmen und/oder Heißverprägen an dem Träger befestigt werden.

Die Vormontage kann zudem ein Anschließen von Kabeln mithilfe von Steckverbindungen an die mindestens eine Platine bzw. die Verbindungselemente der mindestens einen Platine bzw. ein Verbinden mit anderen elektrischen bzw. elektronischen Komponenten des Arbeitsgeräts umfassen. Auch nach dem Verfahren in die Endposition kann noch mindestens eine weitere elektrische Verbindung zwischen der mindestens einen Platine und einer elektrischen bzw. elektronischen Komponente des elektrischen Arbeitsgeräts hergestellt werden. Durch die Montage der mindestens einen Platine nach dem vorgeschlagenen Verfahren kann das Herstellen des elektrischen Arbeitsgerät schneller und zuverlässiger erfolgen. Dies ermöglicht u.a. kürzere Taktzeiten entsprechender Fertigungslinien.

Die Vormontagestellung kann eine zum Gehäuse des elektrischen Arbeitsgeräts angehobene bzw. aufrechte Stellung sein. In dieser Stellung kann der Träger bspw. um eine Achse bzw. Hochachse dreh- oder schwenkbar gelagert sein. Auf diese Weise kann die Zugänglichkeit zu dem Träger bzw. zu der mindestens einen Platine verbessert werden. In vielen Fällen kann der Träger bzw. die mindestens eine Platine durch eine derartige Lagerung von zwei oder sogar mehr Seiten zugänglich sein. Der Träger für die mindestens eine Platine, das mindestens eine Trägerhaltemittel und/oder das Gehäuse bzw. der Gehäuseabschnitt des oben beschriebenen elektrischen Arbeitsgeräts kann eine zur dreh- oder schwenkbaren Lagerung des Trägers - bspw. um eine Achse bzw. Hochachse - entsprechende Ausgestaltung aufweisen.

Die Vormontagestellung kann durch eine bevorzugte Vormontageposition ausgezeichnet sein, in der der Träger zur Endposition ausgedreht gelagert ist. Der Träger weist demnach in der bevorzugten Vormontageposition eine andere Orientierung als in der Endposition auf. Dadurch können Stellen des Trägers bzw. der mindestens einen Platine in der bevorzugten Vormontageposition zugänglich sein, die in der Endposition nicht zugänglich wären, oder zumindest leichter zugänglich sein als in der Endposition. Die andere Orientierung kann in einer um eine Drehachse gedrehte Orientierung des Trägers bestehen. Sie kann auch eine Orientierung sein, die durch eine Schwenkbewegung um eine Schwenkachse entsteht. Der Träger für die mindestens eine Platine, das mindestens eine Trägerhaltemittel und/oder das Gehäuse bzw. der Gehäuseabschnitt des oben beschriebenen elektrischen Arbeitsgeräts kann eine zur Auszeichnung der bevorzugten Vormontageposition entsprechende Ausgestaltung aufweisen.

Nach erfolgter Vormontage in der bevorzugten Vormontageposition kann der Träger beim Verfahren in die Endposition um eine Achse gedreht bzw. geschwenkt und dann in das Gehäuse des elektrischen Arbeitsgeräts abgesenkt bzw. abgelassen werden, d.h. er kann in einer kombinierten Dreh- und Translationsbewegung bzw. einer Dreh-Schub-Bewegung bzw. Hub- und Schwenkbewegung bzw. Hub-Schwenkoperation relativ zum Gehäuse verfahren werden. Durch einen derart definierten und in vielen Fällen kurzen Verfahrweg können Beschädigungen oder ein Einklemmen von Leitungen vermieden werden.

Weitere Merkmale der Erfindung ergeben sich aus den Zeichnungen, in denen nachstehend im Einzelnen Ausführungsbeispiele bzw. Aspekte der Erfindung wiedergegeben sind. Es zeigen:
- Fig. 1: einen Träger mit einer Platine;
- Fig. 2: eine Explosionsdarstellung eines Trägers mit zwei Platinen;
- Fig. 3: einen Träger auf einem Gehäuseteil eines elektrischen Arbeitsgeräts in einer bevorzugten Vormontageposition;
- Fig. 4: den in Fig. 3 gezeigten Träger in einer Endposition in dem Gehäuseteil des elektrischen Arbeitsgeräts;
- Fig. 5: ein elektrisches Arbeitsgerät mit einem Träger in einer bevorzugten Vormontageposition;
- Fig. 6: das in Fig. 5 gezeigt Arbeitsgerät mit dem Träger in einer Endposition; und
- Fig. 7: einen Ablaufplan eines erfindungsgemäßen Verfahrens.

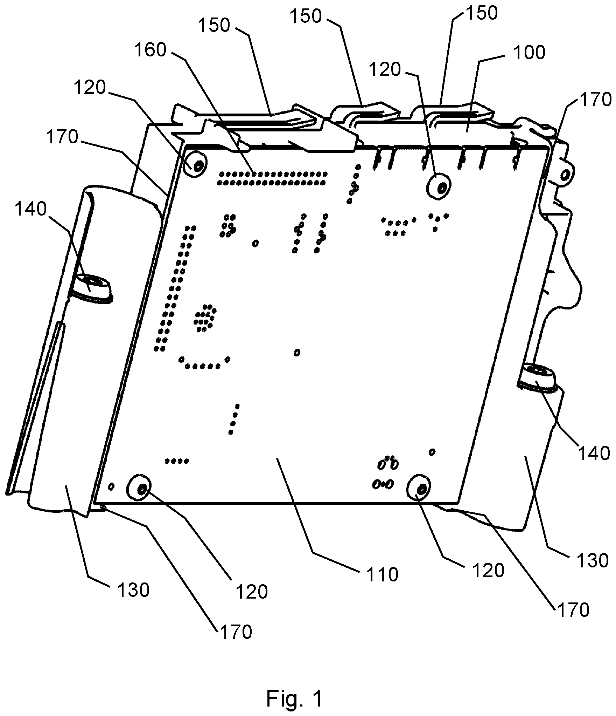

Fig. 1 zeigt einen Träger 100 mit einer Platine 110 zur Montage der Platine 110 in einem elektrischen Arbeitsgerät. Die Platine 110 ist an dem Träger 100 mithilfe von Schrauben 120 befestigt. In diesem Ausführungsbeispiel ist die Platine 110 mit vier Schrauben 120 an dem Träger 100 befestigt.

Der Träger 100 weist zudem zwei Schraubhülsen 130 auf. Die Schraubhülsen 130 sind auf gegenüberliegenden Seiten des Trägers 100 angeordnet. In jede der Schraubhülsen 130 ist jeweils eine Schraube 140 eingelassen. Mit den Schrauben 140 kann der Träger 100 an entsprechenden Schraubdomen eines Gehäuseabschnitts eines Gehäuses oder Gehäuseteils des elektrischen Arbeitsgeräts befestigt werden. Mit den Schraubhülsen 130 kann der Träger 100 zudem in einer Vormontagestellung an dem Gehäuseabschnitt des elektrischen Arbeitsgeräts gehalten werden, um eine Vormontage der Platine 110 in der Vormontagestellung zu ermöglichen. Die Schraubhülsen 130 sind demnach Trägerhaltemittel, d.h. Haltemittel, die ausgebildet sind, um den Träger 100 mit der mindestens einen Platine 110 in der Vormontagestellung an dem Gehäuseabschnitt des elektrischen Arbeitsgeräts zu halten. Der Träger 100 weist zudem Kabelklemmen 150 auf. Die Kabelklemmen 150 dienen zur Aufnahme, Führung und Fixierung eines oder mehrerer Kabel, die bei der Montage des elektrischen Arbeitsgeräts, insbesondere der Vormontage der Platine 110, zum Herstellen der elektrischen Verbindungen zwischen der Platine 110 und den elektrischen bzw. elektronischen Komponenten des elektrischen Arbeitsgeräts dienen. Mit den Kabelklemmen 150 wird u.a. die Vormontage der Platine 110 sowie das Verfahren des Trägers in eine Endposition des elektrischen Arbeitsgeräts erleichtert.

Die Platine 110 weist Steckplätze 160 auf. Die Steckplätze 160 dienen zur elektrischen Verbindung mit den elektrischen bzw. elektronischen Komponenten des Arbeitsgeräts und etwaigen anderen Platinen bspw. mithilfe von entsprechend ausgebildeten Kabeln, Flachbandkabeln bzw. Platinensteckverbindern auf.

Der Träger 100 weist zudem Auskragungen 170 auf. Die Auskragungen 170 können auch als überstehende Elemente angesehen werden, die die Platine 110 seitlich umgeben und auf diese Weise vor Beschädigungen und mechanischen Einflüssen schützen.

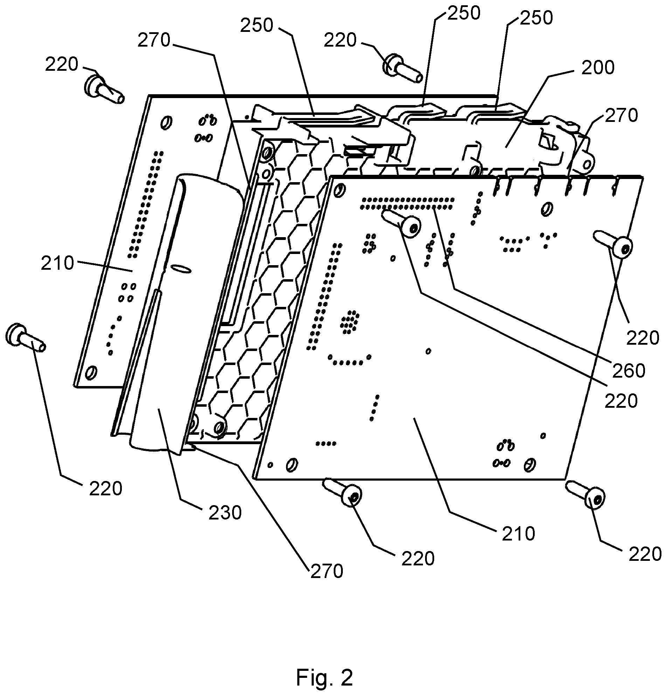

Fig. 2 zeigt einen weiteren Träger 200 mit zwei Platinen 210. Der Träger 200 mit den zwei Platinen 210 ist in einer Explosionsdarstellung gezeigt. Erweist ebenfalls Schrauben 220 zum Befestigen der Platinen 210 auf, wobei zur Befestigung der zwei Platinen 210 acht Schrauben 220 genutzt werden. Seitlich an dem Träger 200 sind zwei Schraubhülsen 230 angeordnet. Die Schraubhülsen 230 sind wie beim Träger 100 einteilig bzw. einstückig mit dem Träger 200 ausgeführt. Zur Aufnahme, Führung und Fixierung von (Flachband-)Kabeln weist der Träger 200 ebenfalls Kabelklemmen 250 auf. Die Kabelklemmen 250 sind ebenfalls - wie die Schraubhülsen 230 - einteilig mit dem Träger 200 ausgeführt. Die Platinen 210 weisen zudem Steckplätze 260 auf zur elektrischen Verbindung mit den elektrischen bzw. elektronischen Komponenten und etwaigen anderen Platinen des Arbeitsgeräts mithilfe von bspw. entsprechend ausgebildeten (Flachband-)Kabeln bzw. Platinensteckverbindern. Beide Platinen 210 sind auch beim Träger 200 durch Auskragungen 270 geschützt.

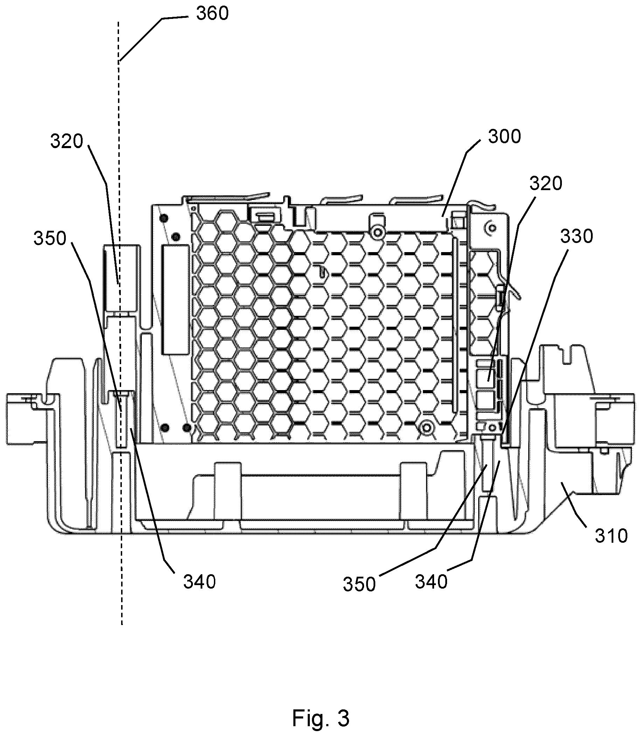

Fig. 3 zeigt einen Träger 300 auf einem Gehäuseteil 310 eines elektrischen Arbeitsgeräts in einer Schnittdarstellung. Der Träger 300 weist zwei Schraubhülsen 320 und eine hülsenförmige Stützstruktur 330 auf, die zumindest abschnittsweise dieselbe Hülsenform wie die Schraubhülsen 320 aufweist. Die Schraubhülsen 320, die Stützstruktur 330 und der Träger 300 sind einstückig bzw. einteilig ausgeführt.

Das Gehäuseteil 310 weist zwei Schraubdome 340 mit Aufnahmen 350 für Schrauben auf. Die zwei Schraubdome 340 mit den Aufnahmen 350 für Schrauben sind komplementär zu den Schraubhülsen 320 ausgebildet, so dass die Schraubhülsen 320 zur Befestigung des Trägers in einer Endposition in dem Gehäuseteil 310 in die Schraubdome 340 eingreifen können.

Der Träger 300 steht in der in Fig. 3 gezeigten Darstellung mithilfe einer seiner Schraubhülsen 320 und der Stützstruktur 330 auf den beiden Schraubdomen 340 des Gehäuseteils 310, wobei einer der beiden Schraubdome 340 in die eine Schraubhülse 310 und der andere der beiden Schraubdome 340 in die Stützstruktur 330 eingreift. Der Träger 300 befindet sich dabei in einer bevorzugten Vormontageposition. Der Träger 300 kann in dieser Position angehoben werden, und zwar so, dass zwar noch der eine der beiden Schraubdome 340 in die eine Schraubhülse 310 eingreift, der andere Schraubdom 340 aber nicht mehr in die Stützstruktur. Der Träger 300 kann in dieser angehobenen Vormontagestellung um eine Hochachse 360 gedreht werden. Der Träger 300 kann demnach bei Bedarf in der bevorzugten Vormontageposition abgestellt werden, bspw. um eine Platine an dem Träger 300 anzuschrauben und vorzumontieren. Er kann aber auch in der Vormontagestellung um die Hochachse 360 bei Bedarf gedreht werden, z.B. um anschließend im Rahmen der Vormontage eine elektrische Verbindung zwischen einer am Träger befestigten Platine und einer elektrischen bzw. elektronischen Komponente des elektrischen Arbeitsgeräts herzustellen.

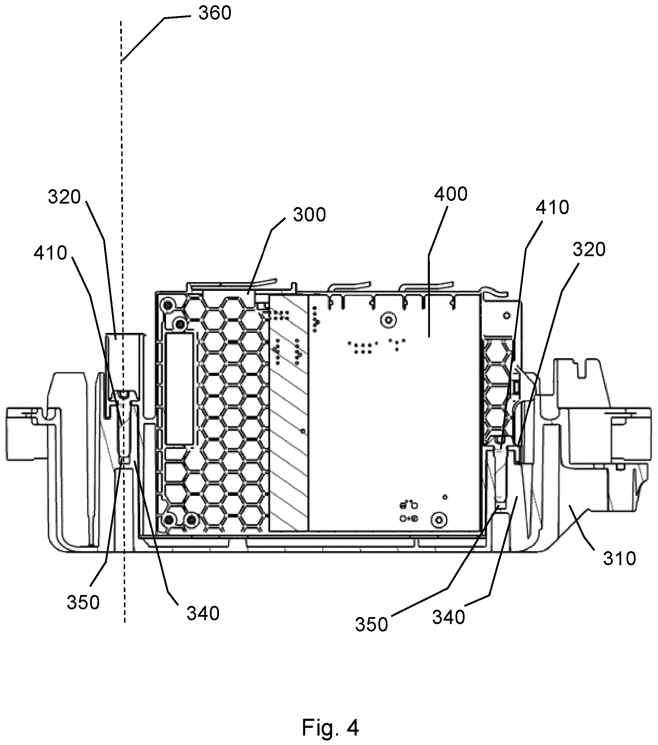

Fig. 4 zeigt den in Fig. 3 dargestellten Träger 300 mit einer Platine 400 in einer Endposition an dem Gehäuseteil 310 des elektrischen Arbeitsgeräts, und zwar wiederum in einer Schnittdarstellung. Um den Träger 300 von der in Fig. 3 gezeigten bevorzugten Vormontageposition in die Endposition zu verfahren, wurde der Träger 300 angehoben und um die Hochachse 360 gedreht. Dies äußert sich in der Schnittdarstellung dadurch, dass die Platine 400 nunmehr nur teilweise abgebildet ist, da der Schnitt durch die Platine 400 verläuft.

Im Anschluss an die Drehung um die Hochachse 360 wurde der Träger 300 abgesenkt, so dass die Schraubdome 340 in die Schraubhülsen 320 eingreifen. In die Schraubhülsen 320 und die Aufnahmen 350 der Schraubdome 340 wurden dann Schrauben 410 eingelassen. Mit den Schrauben 410 wurde der Träger 300 zu guter Letzt in der Endposition an dem Gehäuseteil 310 festgeschraubt, d.h. der Träger 300 befindet sich nun in der Endposition an einem Gehäuseabschnitt des elektrischen Arbeitsgeräts bzw. des Gehäuseteils 310.

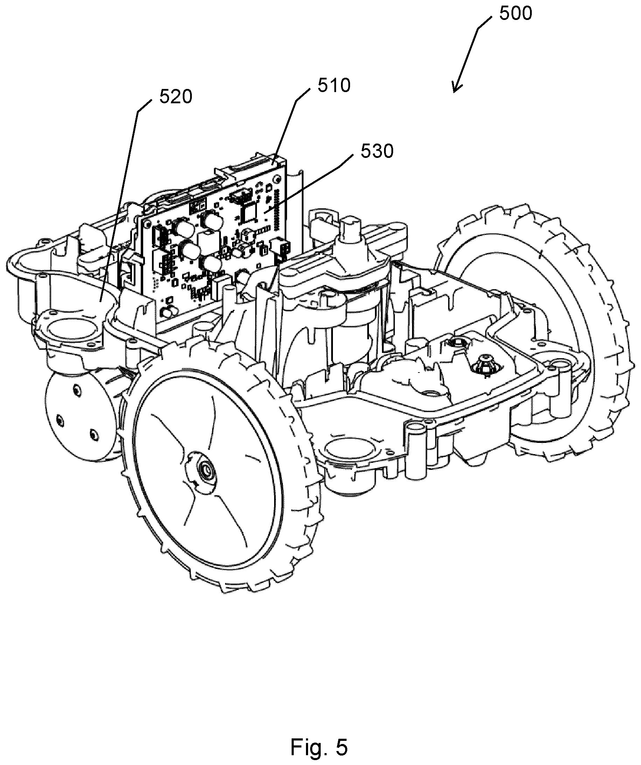

Fig. 5 zeigt ein elektrisches Arbeitsgerät 500. Das elektrische Arbeitsgerät 500 weist einen Träger 510 mit einer Platine 530 und ein Gehäuseteil 520 auf. Der Träger 500 und das Gehäuseteil 520 sind in der gleichen Weise ausgebildet wie der Träger 300 und das Gehäuseteil 310. In der gezeigten Darstellung befindet sich der Träger 510 in einer bevorzugten Vormontageposition an dem Gehäuseteil 520.

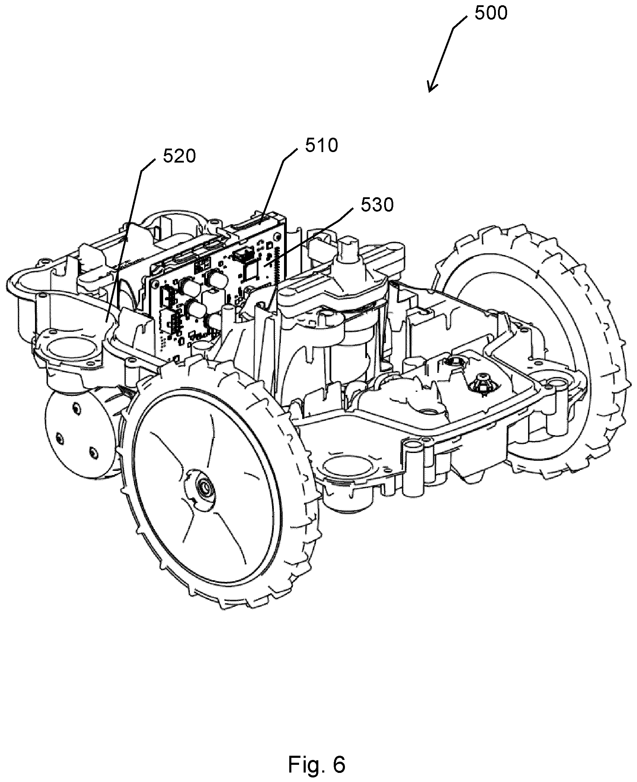

Fig. 6 zeigt das elektrische Arbeitsgerät 500. Der Träger 510 befindet sich nun jedoch nicht mehr in der bevorzugten Vormontageposition an dem Gehäuseteil 520, sondern in einer Endposition. In dieser Endposition ist der Träger 510 am dem Gehäuseteil 520 mit Schrauben befestigt.

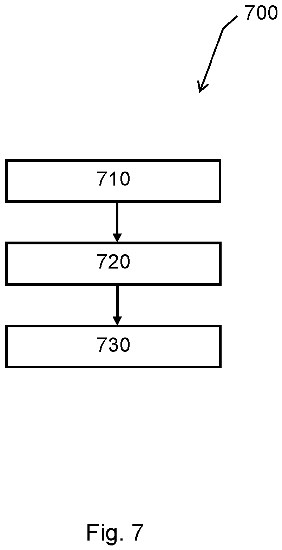

Fig. 7 zeigt einen Ablaufplan eines erfindungsgemäßen Verfahrens 700 zum Herstellen eines elektrischen Arbeitsgeräts 500 mit einer Platine 530. Das Verfahren 700 beginnt mit Schritt 710, in dem ein Träger 510 für die Platine 530 in einer bevorzugten Vormontageposition an einem Gehäuseabschnitt eines Gehäuseteils 520 des elektrischen Arbeitsgeräts 500 platziert wird. Die Platine 530 wird anschließend in Schritt 720 auf dem Träger 510 in der bevorzugten Vormontageposition an dem Gehäuseabschnitt vormontiert. Die bevorzugte Vormontageposition ist dabei eine zum Gehäuseteil 510 des elektrischen Arbeitsgeräts 500 angehobene bzw. aufrechte Position, die zudem gegenüber der für den Träger 510 vorgesehenen Endposition in dem elektrischen Arbeitsgerät 500 um eine Achse bzw. Hochachse ausgedreht ist. In dieser Position kann der Träger 510 angehoben und um die Achse bzw. Hochachse geschwenkt werden. Auf diese Weise ist der Träger 510 bzw. die Platine 530 besser zugänglich als in der für die Platine 530 bzw. den Träger 510 vorgesehenen Endposition in dem elektrischen Arbeitsgerät 500. Dadurch wird die Vormontage der Platine 530 erheblich einfacher und kann zuverlässiger ausgeführt werden. Nach erfolgter Vormontage in der bevorzugten Vormontageposition wird der Träger 510 in Schritt 730 in die für ihn vorgesehen Endposition in dem Gehäuseteil 520 des elektrischen Arbeitsgeräts 500 verfahren. Er wird dabei angehoben und um die Achse bzw. Hochachse gedreht. Anschließend wird er in das Gehäuseteil 520 des elektrischen Arbeitsgeräts 500 abgesenkt bzw. abgelassen. Er wird somit in einer kombinierten Dreh- und Translationsbewegung bzw. einer Dreh-Schub-Bewegung verfahren. Der Verfahrweg ist dabei durch die Ausgestaltung des Trägers 510 und des Gehäuseteils 520 zumindest teilweise vorgegeben. Dadurch können Beschädigungen oder ein Einklemmen von Leitungen beim Verfahren vermieden werden und die Montage des elektrischen Arbeitsgeräts 500 schneller und zuverlässiger erfolgen.

### Bezugszeichen

- 100: Träger
- 110: Platine
- 120: Schraube
- 130: Schraubhülse
- 140: Schraube
- 150: Kabelklemme
- 160: Steckplatz
- 170: Auskragung

- 200: Träger
- 210: Platine
- 220: Schraube
- 230: Schraubhülse
- 240: Schraube
- 250: Kabelklemme
- 260: Steckplatz
- 270: Auskragung

- 300: Träger
- 310: Gehäuseteil
- 320: Schraubhülse
- 330: Stützstruktur
- 340: Schraubdom
- 350: Aufnahme
- 360: Hochachse

- 400: Platine
- 410: Schraube

- 500: Elektrisches Arbeitsgerät
- 510: Träger
- 520: Gehäuseteil
- 530: Platine

- 700: Verfahren zum Herstellen eines elektrischen Arbeitsgeräts
- 710: Platzieren eines Trägers
- 720: Vormontieren einer Platine auf dem Träger
- 730: Verfahren des Trägers in eine Endposition

## Patentansprüche

1. Elektrisches Arbeitsgerät (500), bspw. ein Dienstroboter, insbesondere ein Mäh-, Kehr- oder Saugroboter, mit einem Gehäuse, einem Träger (100; 200; 300; 510) für mindestens eine Platine (110; 210; 400; 530) und mindestens einem Trägerhaltemittel, wobei das mindestens eine Trägerhaltemittel ausgebildet ist, um den Träger (100; 200; 300; 510) unmittelbar an einem Abschnitt des Gehäuses des elektrischen Arbeitsgeräts (500) in einer Vormontagestellung zu halten, um eine Vormontage der mindestens einen Platine (110; 210; 400; 530) an dem Träger (100; 200; 300; 510) in der Vormontagestellung zu ermöglichen; und wobei der Träger (100; 200; 300; 510) ausgebildet ist, um mit der mindestens einen Platine (110; 210; 400; 530) nach Abschluss der Vormontage von der Vormontagestellung zu einer Endposition verfahren zu werden, wobei das Verfahren des Trägers (100; 200; 300; 510) von der Vormontagestellung zu der Endposition relativ zu dem Gehäuseabschnitt zur Montage der mindestens einen Platine (110; 210; 400; 530) in dem elektrischen Arbeitsgerät (500) erfolgt.

2. Elektrisches Arbeitsgerät (500) nach dem vorhergehenden Anspruch,
**dadurch gekennzeichnet,**
**dass** der Träger (100; 200; 300; 510) mindestens ein Haltemittel aufweist und dass das mindestens eine Haltemittel ausgebildet ist, um den Träger (100; 200; 300; 510) in der Endposition unmittelbar an dem Gehäuseabschnitt des elektrischen Arbeitsgeräts (500) zu befestigen.

3. Elektrisches Arbeitsgerät (500) nach einem der vorhergehenden Ansprüche,
**dadurch gekennzeichnet,**
**dass** das mindestens eine Trägerhaltemittel ausgebildet ist, um den Träger (100; 200; 300; 510) an dem Gehäuseabschnitt des elektrischen Arbeitsgeräts (500) in der Vormontagestellung verschiebbar, drehbar und/oder schwenkbar zu lagern.

4. Elektrisches Arbeitsgerät (500) nach einem der vorhergehenden Ansprüche,
**dadurch gekennzeichnet,**
**dass** das elektrische Arbeitsgerät (500) ein weiteres Trägerhaltemittel (330) aufweist und dass die Vormontagestellung eine bevorzugte Vormontageposition umfasst, wobei das weitere Trägerhaltemittel (330) ausgebildet ist, um den Träger (100; 200; 300; 510) in der bevorzugten Vormontageposition zu halten.

5. Elektrisches Arbeitsgerät (500) nach einem der vorhergehenden Ansprüche, **gekennzeichnet durch**
ein Führungsmittel, das ausgebildet ist, um den Träger (100; 200; 300; 510) mit der mindestens einen Platine (110; 210; 400; 530) nach Abschluss der Vormontage von der Vormontagestellung an dem Gehäuseabschnitt des elektrischen Arbeitsgeräts (500) zu einer Endposition relativ zu dem Gehäuseabschnitt des elektrischen Arbeitsgeräts (500) zu verfahren.

6. Elektrisches Arbeitsgerät (500) nach einem der vorhergehenden Ansprüche,
**dadurch gekennzeichnet,**
**dass** das mindestens eine Trägerhaltemittel eine Führungshülse, insbesondere eine Schraubhülse (130; 230; 320), oder ein Teil einer Führungshülse, insbesondere einer Schraubhülse (130; 230; 320), ist.

7. Elektrisches Arbeitsgerät (500) nach einem der vorhergehenden Ansprüche **gekennzeichnet durch**
mindestens ein Trägerhaltemittelgegenstück, wobei das mindestens eine Trägerhaltemittel und das mindestens eine Trägerhaltemittelgegenstück ausgebildet sind, um zum Halten des Trägers (100; 200; 300; 510) unmittelbar an dem Gehäuseabschnitt des elektrischen Arbeitsgeräts (500) in der Vormontagestellung zusammenzuwirken.

8. Elektrisches Arbeitsgerät (500) nach dem unmittelbar vorhergehenden Anspruch, **dadurch gekennzeichnet,**
**dass** die Vormontagestellung an dem Gehäuseabschnitt durch die Ausgestaltung des mindestens einen Trägerhaltemittels und des mindestens einen Trägerhaltemittelgegenstücks eindeutig vorgegeben ist.

9. Elektrisches Arbeitsgerät (500) nach dem unmittelbar vorhergehenden Anspruch, **dadurch gekennzeichnet,**
**dass** das mindestens eine Trägerhaltemittelgegenstück ein Führungsstift, insbesondere ein Schraubdom (340), oder ein Teil eines Führungsstifts, insbesondere eines Schraubdoms (340), ist.

10. Elektrisches Arbeitsgerät (500) nach einem der vorhergehenden Ansprüche,
**dadurch gekennzeichnet,**
**dass** der Träger (100; 200; 300; 510) derart ausgebildet ist, um Steckkräfte aufzunehmen.

11. Elektrisches Arbeitsgerät (500) nach einem der vorhergehenden Ansprüche,
**dadurch gekennzeichnet,**
**dass** der Träger (100; 200; 300; 510) aus einem oder mehreren Materialien gefertigt und/oder derart ausgebildet ist, um elektromagnetische Störeinflüsse abzuschirmen und/oder überschüssige Wärme abzuführen.

12. Verfahren zum Herstellen eines elektrischen Arbeitsgeräts (500), bspw. eines Dienstroboters, insbesondere eines Mäh-, Kehr- oder Saugroboters, mit mindestens einer Platine (110; 210; 400; 530) mit folgenden Schritten:
- Platzieren eines Trägers (100; 200; 300; 510) für die mindestens eine Platine (110; 210; 400; 530) in einer Vormontagestellung an einem Gehäuseabschnitt des elektrischen Arbeitsgeräts (500);
- Vormontieren der mindestens einen Platine (110; 210; 400; 530) auf dem Träger (100; 200; 300; 510) in der Vormontagestellung an dem Gehäuseabschnitt; und
- Verfahren des Trägers (100; 200; 300; 510) in eine Endposition des elektrischen Arbeitsgeräts (500), wobei das Verfahren des Trägers (100; 200; 300; 510) relativ zu dem Gehäuseabschnitt zur Montage der mindestens einen Platine (110; 210; 400; 530) in der Endposition erfolgt.

13. Verfahren nach dem unmittelbar vorhergehenden Anspruch,
**dadurch gekennzeichnet,**
**dass** der Träger (100; 200; 300; 510) in der Vormontagestellung um eine Achse (360) dreh- oder schwenkbar gelagert ist.

14. Verfahren nach einem der beiden unmittelbar vorhergehenden Ansprüche,
**dadurch gekennzeichnet,**
**dass** die Vormontagestellung eine bevorzugte Vormontageposition aufweist und dass der Träger (100; 200; 300; 510) in der bevorzugten Vormontageposition zur Endposition ausgedreht gelagert ist.

15. Verfahren nach einem der Ansprüche 12 bis 14,
**dadurch gekennzeichnet,**
**dass** der Träger (100; 200; 300; 510) durch eine Dreh-Schub-Bewegung in die Endposition verfahren wird.
